# EUROPÄISCHE PATENTANMELDUNG

(11) **EP 4 087 104 A1**
(43) Veröffentlichungstag der Anmeldung: **09.11.2022**
(21) Anmeldenummer: 21172769.8
(22) Anmeldetag: 07.05.2021
(51) Int. Cl.: H02M 1/00, B23K 9/10, B23K 11/24

(54) **MULTI-INVERTERSTROMQUELLE FÜR EINE SCHWEISSANLAGE**

(71) Anmelder: FRONIUS INTERNATIONAL GmbH, 4643 Pettenbach (AT)
(72) Erfinder: Itzenberger, Daniel, 4643 Pettenbach (AT); Kornfeldner, Mario, 4643 Pettenbach (AT); Söllinger, Dominik, 4643 Pettenbach (AT)
(74) Vertreter: Isarpatent

(57) **Zusammenfassung**

Multi-Inverterstromquelle für eine Schweißanlage, wobei die Multi-Inverterstromquelle (1) mehrere voneinander unabhängige Wechselrichterschaltungen (7A; 7B) aufweist, welche eine von einem gemeinsamen Zwischenkreis (6) der Multi-Inverterstromquelle (1) bereitgestellte Zwischenkreisspannung (U_{ZK}) in Ausgangswechselspannungen für zugehörige an die Multi-Inverterstromquelle (1) anschließbare Transformatoren (8A; 8B) von getrennten Schweißkreisen (SK) der Schweißanlage umwandeln.

## Beschreibung

Die Erfindung betrifft eine Multi-Inverterstromquelle für eine Schweißanlage mit mehreren getrennten Schweißkreisen.

Ein Schweißgerät verfügt über ein Leistungsteil, welches an ein Stromversorgungsnetz anschließbar ist. Das Leistungsteil liefert einen Schweißstrom zur Durchführung eines Schweißvorganges bzw. Schweißprozesses. Eine Steuerung des Schweißgerätes kann zur Einstellung bzw. Regelung des zugeführten Schweißstromes vorgesehen sein. Die Steuerung des Schweißgerätes regelt dabei den zeitlichen Ablauf des Schweißprozesses, wobei Schweißparameter eingestellt und überwacht werden können. Dabei kann ein Zwischenkreis als Energiespeicher dienen. Der Zwischenkreis versorgt eine Wechselrichterschaltung, welche die von dem Zwischenkreis bereitgestellte Zwischenkreisspannung in eine Ausgangswechselspannung umwandelt. Diese Wechselrichterspannung kann über einen Transformator und eine Gleichrichterschaltung einem Schweißkreis der Schweißanlage zur Durchführung eines Schweißprozesses zugeführt werden. Herkömmliche Schweißgeräte sind daher nur in der Lage, einen Schweißkreis einer Schweißanlage mit Schweißstrom zu versorgen. Bei einigen Anwendungsfällen ist es allerdings erforderlich, mehrere getrennte Schweißkreise zur Durchführung von Schweißprozessen mit einem Schweißstrom zu versorgen. Hierzu werden herkömmlicherweise mehrere voneinander unabhängige Inverterstromquellen verwendet. Ein Nachteil dieser herkömmlichen Anordnung besteht darin, dass die zeitliche Synchronisation der verschiedenen Inverterstromquellen bei Durchführung der Schweißprozesse sehr komplex ist und daher zeitlich nicht exakt aufeinander abgestimmt arbeiten. Darüber hinaus kann jede Inverterstromquelle nur eine bestimmte Leistung an den jeweiligen Schweißkreis abgeben.

Es ist daher eine Aufgabe der Erfindung, eine Inverterstromquelle für eine Schweißanlage zu schaffen, die es erlaubt, Schweißprozesse in getrennten Schweißkreisen zeitlich aufeinander abzustimmen und die an den jeweiligen Schweißkreis abgegebene Leistung bei Bedarf flexibel anzupassen.

Diese Aufgabe wird erfindungsgemäß durch eine Multi-Inverterstromquelle für eine Schweißanlage mit den in Patentanspruch 1 angegebenen Merkmalen gelöst.

Die Erfindung schafft demnach eine Multi-Inverterstromquelle für eine Schweißanlage, wobei die Multi-Inverterstromquelle mindestens eine unabhängige Wechselrichterschaltung aufweist, wobei die Wechselrichterschaltungen eine von einem gemeinsamen Zwischenkreis der Multi-Inverterstromquelle bereitgestellte Zwischenkreisspannung in eine Ausgangswechselspannung für zugehörige an die Multi-Inverterstromquelle anschließbare Transformatoren von getrennten Schweißkreisen der Schweißanlage umwandeln.

Die erfindungsgemäße Multi-Inverterstromquelle verfügt somit über mehrere voneinander unabhängige Wechselrichterschaltungen zur Versorgung von getrennten Schweißkreisen der Schweißanlage.

Bei einer möglichen Ausführungsform der erfindungsgemäßen Multi-Inverterstromquelle weisen die Wechselrichterschaltungen jeweils steuerbare Halbleiterschalter auf, welche beispielsweise in einer Vollbrücke miteinander verschaltet sind, welche die Zwischenkreisspannung des Zwischenkreises in eine Ausgangswechselspannung für einen zugehörigen Transformator umwandelt. Alternativ können die Halbleiterschalter auch eine NPC Topologie aufweisen.

Bei einer möglichen Ausführungsform der erfindungsgemäßen Multi-Inverterstromquelle werden die steuerbaren Halbleiterschalter der Wechselrichterschaltung durch eine Steuerung der Multi-Inverterstromquelle angesteuert. Die Steuerung der Multi-Inverterstromquelle erlaubt eine synchronisierte Ansteuerung der in der Vollbrücke der Wechselrichterschaltung verschalteten Halbleiterschalter. Bei diesen Halbleiterschaltern handelt es sich beispielsweise um IGBT-Halbleiterschalter.

Bei einer weiteren möglichen Ausführungsform der erfindungsgemäßen Multi-Inverterstromquelle synchronisiert die Steuerung die Umwandlung der Zwischenkreisspannung durch die verschiedenen Wechselrichterschaltungen in die verschiedenen Wechselspannungen. Hierzu weist die Steuerung vorzugsweise einen Zeitsignal- bzw. Taktsignalgeber auf.

Bei einer weiteren möglichen Ausführungsform der erfindungsgemäßen Multi-Inverterstromquelle sind die mit den Wechselrichterschaltungen verbundenen Transformatoren über zugehörige Gleichrichterschaltungen an die getrennten Schweißkreise der Schweißanlage angeschlossen.

Bei einer weiteren möglichen Ausführungsform der erfindungsgemäßen Multi-Inverterstromquelle sind verschiedene Wechselrichterschaltungen über zugehörige Transformatoren und Gleichrichterschaltungen mittels einer durch die Steuerung der Multi-Inverterstromquelle angesteuerten Schalteinrichtung zur gemeinsamen Energieversorgung an einen Schaltkreis der Schweißanlage schaltbar.

Hierdurch ist es möglich, die elektrische Leistung, welche an einen angeschlossenen Schaltkreis abgegeben wird, stufenweise zu verändern.

Bei einer weiteren möglichen Ausführungsform der erfindungsgemäßen Multi-Inverterstromquelle weisen die verschiedenen Schweißkreise jeweils mindestens eine Schweißeinheit oder eine Schweißzubehöreinheit auf.

Bei einer weiteren möglichen Ausführungsform der erfindungsgemäßen Multi-Inverterstromquelle weist der Zwischenkreis mindestens einen Zwischenkreiskondensator als Energiespeicher sowie eine Begrenzungsschaltung auf, welche eine in dem Zwischenkreiskondensator gespeicherte Energie bei einem auftretenden Ereignis absenkt.

Bei einer weiteren möglichen Ausführungsform der erfindungsgemäßen Multi-Inverterstromquelle weist diese eine Netzgleichrichterschaltung zur Gleichrichtung einer mehrphasigen Netzwechselspannung in die Zwischenkreisspannung auf.

Bei einer weiteren möglichen Ausführungsform der erfindungsgemäßen Multi-Inverterstromquelle regelt die Steuerung der Multi-Inverterstromquelle die von den Wechselrichterschaltungen jeweils abgegebene Ausgangswechselspannung in Abhängigkeit eines sensorisch erfassten Messsignales.

Bei einer weiteren möglichen Ausführungsform der erfindungsgemäßen Multi-Inverterstromquelle sind die steuerbaren Halbleiterschalter der Wechselrichterschaltung IGBT-Schalter, wobei vier IGBT-Schalter in einer aus zwei Halbbrücken bestehenden Vollbrücke miteinander verschaltet sind.

Bei einer weiteren möglichen Ausführungsform der erfindungsgemäßen Multi-Inverterstromquelle ist an Mittenabgriffen der beiden Halbbrücken der als Vollbrücke verschalteten Wechselrichterschaltung eine Primärspule des zugehörigen Transformators über eine Steckverbindung anschließbar.

Die erfindungsgemäße Multi-Inverterstromquelle ist bei einer möglichen Ausführungsform modular aufgebaut.

Die Erfindung schafft gemäß einem zweiten Aspekt eine Schweißanlage mit mehreren getrennten Schweißkreisen, die jeweils über einen Transformator mit Strom versorgt werden, wobei jeder Transformator an eine oder mehrere Wechselrichterschaltungen einer Multi-Inverterstromquelle gemäß dem ersten Aspekt der Erfindung durch eine Steuerung der Multi-Inverterstromquelle oder durch eine Steuerung der Schweißanlage schaltbar ist.

Bei einer möglichen Ausführungsform der erfindungsgemäßen Schweißanlage weisen die getrennten Schweißkreise der Schweißanlage jeweils mindestens einen Schweißbrenner zur Durchführung eines Lichtbogen-Schweißprozesses auf.

Im Weiteren werden mögliche Ausführungsformen der erfindungsgemäßen Multi-Inverterstromquelle und einer erfindungsgemäßen Schweißanlage unter Bezugnahme auf die beigefügten Figuren näher erläutert.

Es zeigen:
- Fig. 1: ein Blockschaltbild zur Darstellung einer möglichen Ausführungsform einer erfindungsgemäßen Multi-Inverterstromquelle;
- Fig. 2: ein Blockschaltbild einer weiteren möglichen Ausführungsform einer erfindungsgemäßen Multi-Inverterstromquelle;
- Fig. 3: ein weiteres Blockschaltbild einer weiteren möglichen Ausführungsform einer erfindungsgemäßen Multi-Inverterstromquelle;
- Fig. 4: ein Blockschaltbild zur Darstellung einer weiteren möglichen Ausführungsform einer erfindungsgemäßen Multi-Inverterstromquelle;
- Figuren 5A, 5B: ein Schaltkreisdiagramm und ein zugehöriges Zeitdiagramm zur Erläuterung der Funktionsweise einer bei der erfindungsgemäßen MultiInverterstromquelle vorgesehenen Vollbrücke;
- Figuren 6A, 6B: ein weiteres Schaltkreisdiagramm und zugehöriges Zeitdiagramm zur Erläuterung der Funktionsweise einer bei der erfindungsgemäßen Multi-Inverterstromquelle vorgesehenen Vollbrücke;
- Figuren 7A, 7B: ein weiteres Schaltkreisdiagramm mit zugehörigem Zeitdiagramm zur Erläuterung der Funktionsweise einer bei der erfindungsgemäßen Multi-Inverterstromquelle vorgesehenen Vollbrücke;
- Figuren 8A, 8B: weitere Schaltkreisdiagramme mit zugehörigem Zeitdiagramm zur Erläuterung der Funktionsweise einer bei der erfindungsgemäßen MultiInverterstromquelle vorgesehenen Vollbrücke;
- Fig. 9: ein Blockschaltbild einer weiteren möglichen Ausführungsform einer erfindungsgemäßen Multi-Inverterstromquelle;
- Fig. 10: mögliche Ausführungsbeispiele für an die erfindungsgemäße Multi-Inverterstromquelle anschließbare Transformatoren mit zugehörigen Gleichrichterschaltungen.

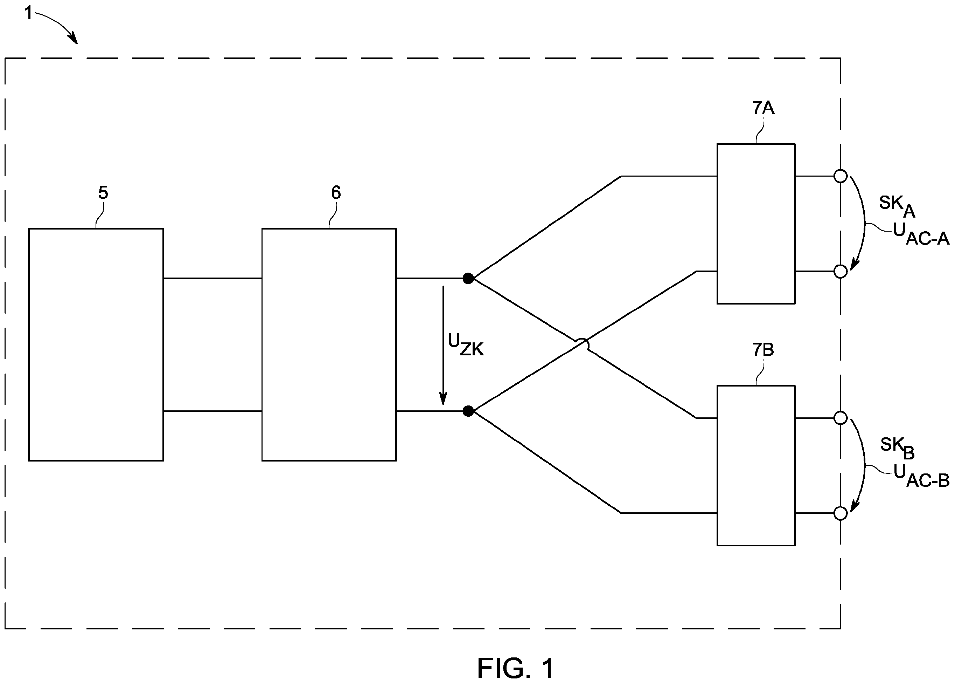

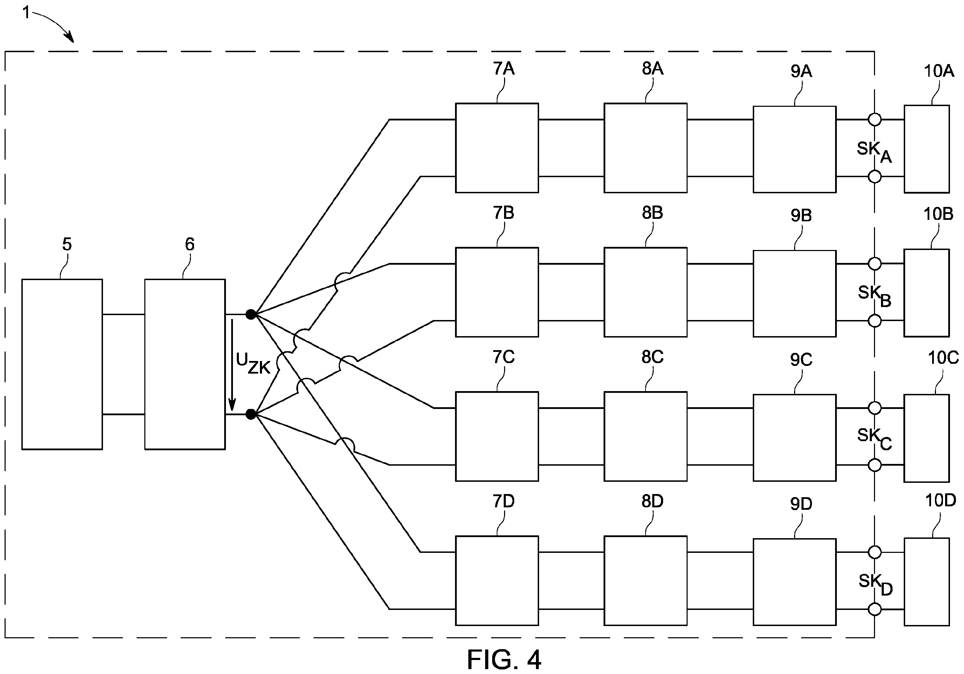

Die in Fig. 1 dargestellte Multi-Inverterstromquelle 1 weist bei dem dargestellten Ausführungsbeispiel eine Netzgleichrichterschaltung 5 auf, an welcher ausgangsseitig ein Zwischenkreis 6 angeschlossen ist. Die Netzgleichrichterschaltung 5 kann bei einer möglichen Ausführungsform steuerbare Thyristor-Dioden-Module enthalten, welche eine anliegende mehrphasige Netzwechselspannung zur Erzeugung einer Zwischenkreisspannung gleichrichten. Bei einer möglichen Ausführungsform könnte jedoch eingangsseitig auch eine DC Versorgungsnetz angeschlossen sein. DC Versorgungen sind dem Fachmann bekannt, daher wird hier nicht näher darauf eingegangen. Der daran angeschlossene Zwischenkreis 6 weist mindestens einen Zwischenkreiskondensator auf. Der Zwischenkreis 6 dient als Energiespeicher und entkoppelt elektrisch die Gleichrichterschaltung 5 von nachgeschalteten Wechselrichterschaltungen 7A, 7B. Bei einer möglichen Ausführungsform verfügt der Zwischenkreis 6 über mindestens einen Zwischenkreiskondensator und eine dazu parallel verschaltete Begrenzungsschaltung. Diese Begrenzungsschaltung kann dazu vorgesehen sein, eine an den Zwischenkreiskondensator des Zwischenkreises 6 auftretende Erhöhung der Zwischenkreisspannung U_{ZK} zur Reduzierung der in dem Zwischenkreis 6 gespeicherten Energie abzusenken. Wie in Fig. 1 dargestellt, ist der Zwischenkreis 6 ausgangsseitig an mehrere Wechselrichterschaltungen 7A, 7B angeschlossen. Bei dem in Fig. 1 dargestellten Ausführungsbeispiel sind zwei voneinander unabhängige Wechselrichterschaltungen 7A, 7B an einen gemeinsamen Zwischenkreis 6 der Multi-Inverterstromquelle 1 angeschlossen. Die Anzahl der parallel an den Ausgang des Zwischenkreises 6 angeschlossenen Wechselrichterschaltungen 7A, 7B kann bei verschiedenen Ausführungsformen der Multi-Inverterstromquelle 1 unterschiedlich sein. Beispielsweise weist das in Fig. 4 dargestellte Ausführungsbeispiel einer erfindungsgemäßen Multi-Inverterstromquelle 1 vier verschiedene voneinander unabhängige Wechselrichterschaltungen 7A bis 7D auf, die an einen gemeinsamen Zwischenkreis 6 angeschlossen sind. Die von dem gemeinsamen Zwischenkreis 6 der Multi-Inverterstromquelle 1 bereitgestellte Zwischenkreisspannung U_{ZK} wird von den unabhängigen Wechselrichterschaltungen 7A, 7B bzw. 7A bis 7D (Fig. 4) in Ausgangswechselspannungen für zugehörige an die Multi-Inverterstromquelle 1 anschließbare getrennte Schweißkreise SK der Schweißanlage umgewandelt. Bei dem in Fig. 1 dargestellten Ausführungsbeispiel dient die Multi-Inverterstromquelle 1 zur Stromversorgung von zwei voneinander getrennten Schweißkreisen SK_{A}, SK_{B}.

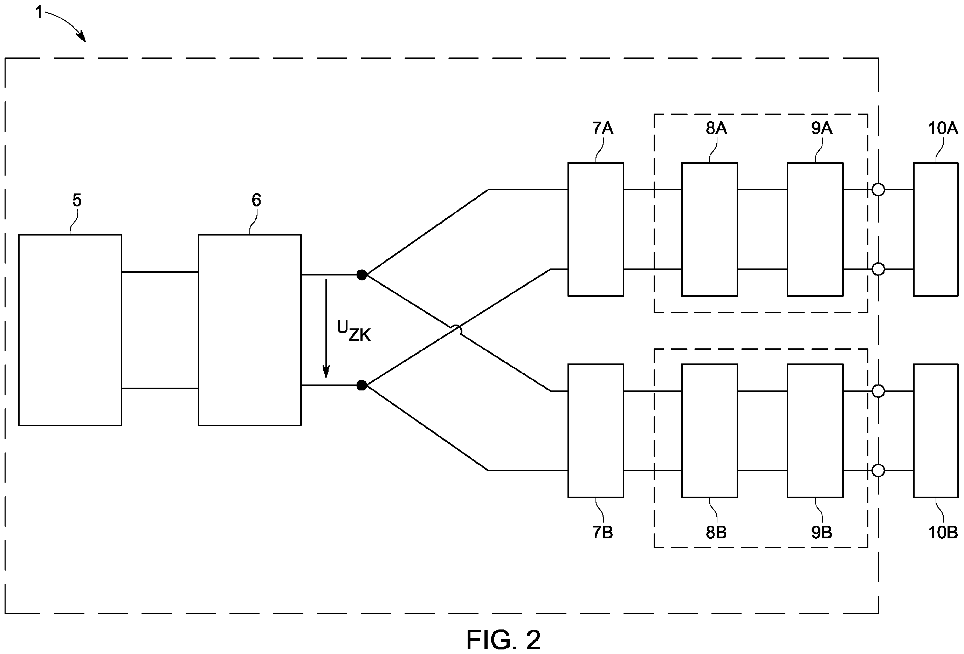

Die Wechselrichterschaltungen 7A, 7B weisen vorzugsweise jeweils steuerbare Halbleiterschalter auf, welche z.B. in einer Vollbrücke miteinander verschaltet sind. Die Vollbrückenschaltungen der einzelnen Schweißkreise wandelt die Zwischenkreisspannung U_{ZK} des Zwischenkreises 6 in eine Ausgangswechselspannung für einen zugehörigen Transformator 8A, 8B um. Auch eine andere Topologie der Schaltung ist möglich, insbesondere ein NPC Topologie. Die verschiedenen steuerbaren Halbleiterschalter der Wechselrichterschaltung 7A, 7B können bei einer möglichen Ausführungsform durch eine Steuerung 11 der Multi-Inverterstromquelle 1 angesteuert werden, welche vorzugsweise in einem Gehäuse der Multi-Inverterstromquelle 1 integriert ist. Bei einer möglichen Ausführungsform weisen die steuerbaren Halbleiterschalter der Wechselrichterschaltung 7A, 7B verschaltete Leistungs-Transistoren, insbesondere IGBT-Module oder, MOSFETs auf. Jede der Wechselrichterschaltungen 7A, 7B liefert bei einer möglichen Ausführungsform eine einphasige Wechselspannung. Diese einphasige AC-Wechselspannung bildet beispielsweise eine mittelfrequente Wechselspannung, die an einen zugehörigen Transformator bzw. Schweißtransformator des Schweißgerätes primärseitig eingespeist wird. Die mittelfrequente Wechselspannung weist bei einer möglichen Ausführungsform eine Frequenz in einem Frequenzbereich von 1kHz bis 1MHz auf. Die IGBT-Module einer Wechselrichterschaltung 7 sind jeweils zu einer Vollbrücke verschaltet, wobei die jeweilige Vollbrücke die DC-Zwischenkreisspannung U_{ZK} in eine AC-Spannung U_{AC} für den zugehörigen Transformator 8 umwandelt. Die in dem Schweißtransformator 8 primärseitig eingespeiste Ausgangswechselspannung U_{AC} kann sekundärseitig über einen Gleichrichter 9A, 9B an eine Schweißeinheit 10A, 10B abgegeben werden, wie in Fig. 2 dargestellt. Die Steuerung 11 der Multi-Inverterstromquelle 1 ist in der Lage, die Umwandlung der Zwischenkreisspannung U_{ZK}, welche von dem Zwischenkreis 6 bereitgestellt wird, durch die verschiedenen daran angeschlossenen Wechselrichterschaltungen 7A, 7B in die verschiedenen Wechselspannungen U_{AC}-_{A} bzw. U_{AC-B} zeitlich zu synchronisieren. Hierzu weist die Steuerung 11 der Multi-Inverterstromquelle 1 vorzugsweise einen Zeitsignal- bzw. Taktsignalgeber auf. Die an die verschiedenen Wechselrichterschaltungen 7A, 7B angeschlossenen Schweißtransformatoren 8A, 8B sind über zugehörige Gleichrichterschaltungen 9A, 9B mit den getrennten Schweißkreisen SK der Schweißanlage verbunden, wie im Blockschaltbild gemäß Fig. 2 dargestellt.

Die Multi-Inverterstromquelle 1 ist bei einer möglichen Ausführungsform modular aufgebaut. Die Module können dabei jeweils eine oder mehrere darin integrierte Komponenten, insbesondere Schaltungen, aufweisen. Die Module können je nach Anwendungsfall und vorzunehmenden Schweißprozess unterschiedliche Komponenten oder unterschiedliche Kombinationen von Komponenten beinhalten. Diese Komponenten bzw. Schaltungen umfassen beispielsweise Wechselrichterschaltungen, Transformatoren, Gleichrichterschaltungen. Die verschiedenen Module sind vorzugsweise austauschbar und können bei Bedarf in einfacher Weise mit anderen Modulen verbunden werden, um so das System zu konfigurieren. Auch die Netzgleichrichterschaltung 5 und der Zwischenkreis 6 können als Komponenten jeweils in Modulen integriert sein.

Die Wechselrichterschaltungen 7A, 7B, die Transformatoren 8A, 8B und die zugehörigen Gleichrichterschaltungen 9A, 9B können je nach Anwendungsfall getrennte Einheiten bilden oder bei einer möglichen Ausführungsform als Teil von Modulen an den Zwischenkreis 6 bzw. ein Zwischenkreismodul angeschlossen werden, beispielsweise mittels einer Steckverbindung oder dergleichen.

Bei einem Widerstandspunktschweißgerät befindet sich der Transformator 8A und die dazu gehörige Gleichrichterschaltung 9A bzw. der Transformator 8B und die dazu gehörige Gleichrichterschalung 9B auf einer entsprechenden Schweißzange 10 A bzw. 10B und werden bei einem Wechsel der Schweißzange 10A bzw. 10B mitausgetauscht. Deshalb werden bei dieser Anwendung allein die Wechselrichterschaltung 7A und die Wechselrichterschaltung 7B als ein Modul oder als zwei getrennte Module in dem Schaltschrank vorgesehen.

Bei einem Lichtbogenschweißgerät befindet sich der Transformator 8A und die dazugehörige Gleichrichterschalung 9A bzw. der Transformator 8B und die zugehörige Gleichrichterschaltung 9B vorzugsweise in dem Gehäuse des Schweißgerätes. Darum werden bei dieser Anwendung vorzugsweise Module mit jeweils darin enthaltener Wechselrichterschaltung, Transformator und dazugehöriger Gleichrichterschaltung in dem Schaltschrank vorgesehen.

Je nach Anwendung und Schweißgerät ist die Position diverser Komponenten vorteilhaft. Deshalb ist eine einheitliche Ausführung und Konfiguration der Module für alle Anwendungen nicht möglich.

Nachdem ein Gesamtsystem keine Bindung an eine Anwendung hat, sondern verschiedene Anwendungen mit diesem modularen Konzept von einem gemeinsamen Zwischenkreis 6 versorgt werden können, besteht eine große Vielfalt an möglichen Ausprägungen und Konfigurationen hinsichtlich der verwendeten Module.

Bei einer möglichen Ausführungsform sind die Wechselrichterschaltungen 7A, 7B, die Schweißtransformatoren 8A, 8B und die zugehörigen Gleichrichterschaltungen 9A, 9B als Module einzeln austauschbar vorgesehen. Dies erhöht die Flexibilität bei dem Einsatz der erfindungsgemäßen Multi-Inverterstromquelle 1 für verschiedene Anwendungsfälle.

Die in Fig. 2 dargestellten Schweißeinheiten 10 können einen Schweißbrenner oder eine Schweißzubehöreinheit aufweisen. Die Schweißeinheit 10 weist beispielsweise einen Schweißbrenner oder eine Schweißzange auf.

Bei einer möglichen Ausführungsform regelt die Steuerung 11 der Multi-Inverterstromquelle 1 die von den Wechselrichterschaltungen 7A, 7B jeweils abgegebene Ausgangswechselspannung UAC-A bzw. UAC-B in Abhängigkeit eines sensorisch erfassten Messsignales. Beispielsweise kann dieses Messsignal an der zugehörigen Gleichrichterschaltung 9A, 9B abgegriffen werden und zur Regelung an die Steuerung 11 der Multi-Inverterstromquelle 1 zurückgeführt werden.

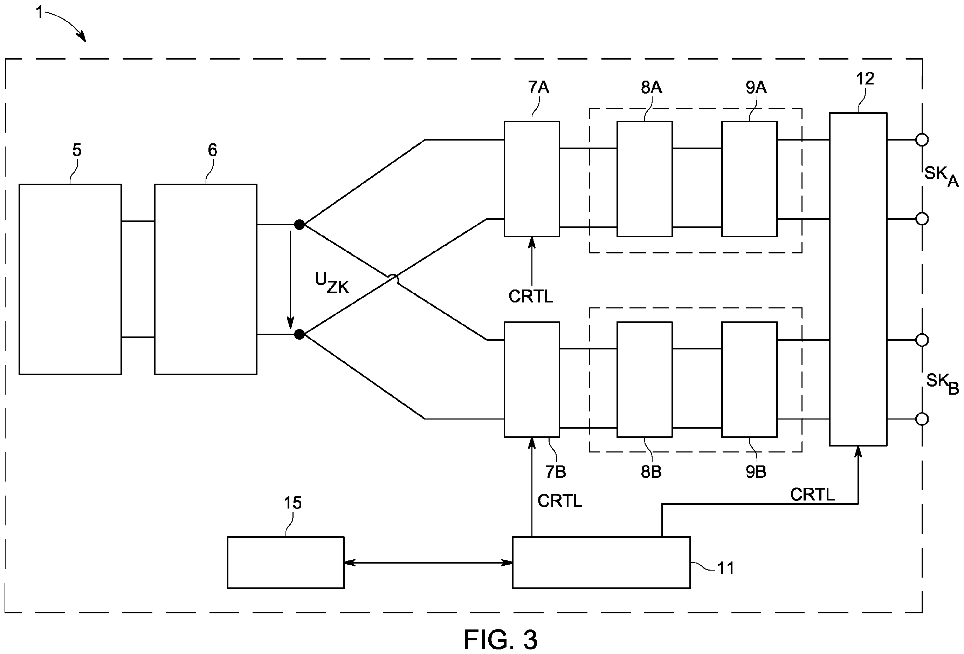

Fig. 3 zeigt ein Blockschaltbild einer weiteren möglichen Ausführungsform der erfindungsgemäßen Multi-Inverterstromquelle 1. Bei dieser Ausführungsform besitzt die Multi-Inverterstromquelle 1 ausgangsseitig eine Schalteinheit 12, die ebenfalls durch die Steuerung 11 der Multi-Inverterstromquelle 1 angesteuert wird. Durch das Vorsehen von Schützen in der Schalteinheit 12 lassen sich die Sekundärpfade kombinieren, d.h. sie können zusammengeschaltet werden oder getrennt voneinander betrieben werden. Die verschiedenen Wechselrichterschaltungen 7A, 7B werden über zugehörige Transformatoren 8A, 8B und Gleichrichteschaltungen 9A, 9B mittels der durch die Steuerung 11 der Multi-Inverterstromquelle 1 angesteuerten Schalteinrichtung 12 zur gemeinsamen Energieversorgung an einen der Schweißkreise SK der Schweißanlage geschaltet. Auf diese Weise ist es möglich, die von den verschiedenen Wechselrichterschaltungen 7A, 7B erzeugte elektrische Leistung an verschiedene Schweißkreise SK der Schweißanlage zu schalten. Beispielsweise wird zunächst der Schweißkreis SK_{A} getrennt von dem Schweißkreis SK_{B} der Schweißanlage durch eine zugehörige Wechselrichterschaltung 7A mit elektrischer Leistung P_{A} versorgt. Bei Bedarf kann durch die Steuerung 11 die von der anderen Wechselrichterschaltung 7B abgegebene elektrische Leistung P_{B} ebenfalls auf den Schweißkreis SK_{A} mithilfe der Schalteinrichtung 12 zugeschaltet werden, sodass sich die an den elektrischen Schweißkreis SK_{A} abgegebene elektrische Leistung (P = P_{A} + P_{B}) erhöht, beispielsweise verdoppelt, wie in der Fig. 3 dargestellt. Auch hierdurch kann die Flexibilität der Multi-Inverterstromquelle 1 für verschiedene Anwendungsfälle erhöht werden. Bei einer möglichen Ausführungsform der erfindungsgemäßen Multi-Inverterstromquelle 1 verfügt diese über eine Nutzerschnittstelle 15, wie in Fig. 3 dargestellt. Durch die Nutzerschnittstelle 15 hat der Nutzer die Möglichkeit einzustellen, ob die von den verschiedenen Wechselrichterschaltungen 7A, 7B erzeugte elektrische Leistung P auf einen bestimmten Schweißkreis SKi der Schweißanlage geschaltet werden soll. Alternativ können die verschiedenen Schweißkreise SK_{A}, SK_{B} auch getrennt voneinander jeweils durch ihre zugehörige Wechselrichterschaltung 7 über den Transformator 8 und die Gleichrichterschaltung 9 mit Strom bzw. Leistung versorgt werden. Auch eine getrennte Regelung der beiden Schweißkreise SK_{A}, SK_{B} mithilfe des jeweils von der zugehörigen Gleichrichterschaltung 9 abgegriffenen Messsignals kann durch die Steuerung 11 durchgeführt werden.

Die in Fig. 2 dargestellten Schweißeinheiten 10A, 10B der Schweißkreise SK_{A}, SK_{B} weisen bei einer möglichen Ausführungsform Schweißbrenner auf. Die getrennten Schweißkreise der Schweißanlage können jeweils mindestens einen Schweißbrenner zur Durchführung eines Lichtbogen-Schweißprozesses aufweisen. Bei diesen Schweißprozessen handelt es sich beispielsweise um einen MIG/MAG-Schweißprozess oder einen WIG-Schweißprozess. Weitere Beispiele für mögliche Schweißprozesse sind Plasmaschweißprozesse, Unterpulverschweißprozesse, Elektrodenschweißen, Heiß-/Kaltdrahtschweißen, welche mittels Hand- sowie Roboterschweißen durchgeführt werden können. Weiterhin ist es möglich, das erfindungsgemäße Verfahren für Widerstandspunktschweißanlagen zu verwenden. Die für diese erwähnten Schweißverfahren benötigten Schweißbrenner sind dem Fachmann bekannt, daher wird an dieser Stelle nicht näher darauf eingegangen. Es sei angemerkt, dass diese Aufzählung nicht abschließend ist und somit auch weitere Schweißverfahren und Schweißbrenner verwendet werden können. Die verschiedenen Schweißkreise SK_{A}, SK_{B} der Schweißanlage können auch parallel unterschiedliche Schweißprozesse mithilfe zugehöriger Schweißbrenner ausführen. Dabei werden sie durch die gemeinsame Multi-Inverterstromquelle 1 mit Schweißstrom versorgt.

Neben Schweißbrennern können auch Schweißzubehöreinheiten an die verschiedenen Schweißkreise SK der Schweißanlage angeschlossen sein. Die Multi-Inverterstromquelle 1 kann auch zur Versorgung dieser Schweißzubehöreinheiten eingesetzt werden. Beispielsweise können Schweißzubehöreinheiten Heizplatten zum Aufheizen von Werkstücken umfassen. Ein weiteres Beispiel für Schweißzubehöreinheiten sind Einheiten zur Entmagnetisierung von Werkstücken. Weiterhin können die Schweißzubehöreinheiten auch zur Vorerwärmung oder Reinigung von Werkstücken oder zu einer sonstigen Nachbehandlung von Werkstücken eingesetzt werden. Weitere Beispiele für Schweißzubehöreinheiten sind dem Fachmann bekannt.

Die Multi-Inverter-Stromquelle 1 kann auch in einem Plasma-Schneidprozess oder einem Bolzenschweißsystem eingesetzt werden.

Die erfindungsgemäße Multi-Inverter-Stromquelle 1 ist in der Lage sowohl Schweißbrenner für unterschiedliche Schweißprozesse als auch Schweißzubehöreinheiten zu versorgen und ist somit flexibel für unterschiedlichste Anwendungsfälle einsetzbar.

Bei dem in Fig. 4 dargestellten Beispiel weist die Multi-Inverter-Stromquelle 1 beispielsweise vier energetisch voneinander unabhängige Wechselrichterschaltungen 7A, 7B, 7C, 7Dauf. Diese wandeln einen von einem gemeinsamen Zwischenkreis 6 bereitgestellte Zwischenkreisspannung in vier verschiedene Ausgangswechselspannungen für zugehörige anschließbare voneinander getrennte Schweißkreise SK auf. Beispielsweise handelt es sich bei den an die Gleichrichterschaltungen 9A,9B anschließbaren Schweißeinheiten 10A, 10B um zwei Schweißbrenner für zwei unterschiedliche Schweißprozesse. Die an die Gleichrichterschaltung 9C anschließbare Schweißeinheit 10C und die an die Gleichrichterschaltung 9D anschließbare Schweißeinheit 10D bilden beispielsweise Schweißzubehöreinheiten zum Vor- und Nachbereiten von Werkstücken die in den Schweißprozessen bearbeitet werden. Die den Wechselrichterschaltungen 7A, 7B, 7C, 7D jeweils nachgeschalteten Schweißtransformatoren (8A-8D) und Gleichrichterschaltungen (9A-9D) können für die jeweilige Schweißeinheit 10A-10D ausgelegt sein und/oder modular ausgetauscht werden.

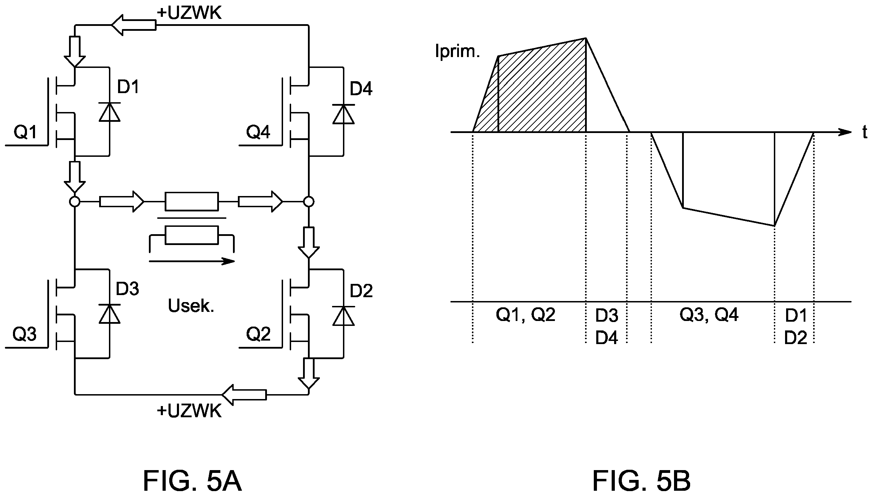

Die Figuren 5 bis 8 dienen zur Erläuterung einer bevorzugten Ausführungsform der in der erfindungsgemäßen Multi-Inverterstromquelle 1 vorgesehenen Wechselrichterschaltungen 7. Bei dem dargestellten Ausführungsbeispiel weist die Wechselrichterschaltung 7 jeweils vier steuerbare Halbleiterschalter Q1, Q2, Q3, Q4 auf, welche in einer Vollbrücke miteinander verschaltet sind. Diese Vollbrücke wandelt die Zwischenkreisspannung U_{ZK} des Zwischenkreises 6 in eine erforderliche Ausgangswechselspannung für einen zugehörigen Schweißtransformator 8A, 8B um.

Die verschiedenen steuerbaren Halbleiterschalter Q1, Q2, Q3, Q4 werden durch eine Steuerung angesteuert. Bei dieser Steuerung handelt es sich vorzugsweise um eine in der Multi-Inverterstromquelle 1 integrierte Steuerung 11. Bei einer alternativen Ausführungsform können die steuerbaren Halbleiterschalter Q1, Q2, Q3, Q4 der Wechselrichterschaltung 7 auch über eine externe Steuerung der Schweißanlage angesteuert werden, welche über eine Steuerungsschnittstelle an die Multi-Inverterstromquelle 1 angeschlossen ist. Bei einer möglichen Ausführungsform sind die verschiedenen steuerbaren Halbleiterschalter Q1 bis Q4 IGBT-Schalter. Wie man in den Figuren 5 bis 8 erkennen kann, sind die steuerbaren Halbleiterschalter Q1 bis Q4 in einer aus zwei Halbbrücken bestehenden Vollbrücke miteinander verschaltet. Bei dieser möglichen Ausführungsform ist ein hartes Schalten der Halbleiterschalter Q dargestellt. Diese Variante wird vorwiegend beim Widerstandspunktschweißen verwendet, bei dieser Topologie die Sekundärverluste deutlich geringer sind. Zusätzlich ist die Schaltentlastung durch die geringe Schaltfrequenz beim Widerstandspunktschweißen nicht so relevant. Beim Lichtbogenschweißen wird bevorzugt eine Phase-Shift Variante eingesetzt, da hier üblicherweise eine deutlich höhere Schaltfrequenz verwendet wird und daher die Schaltverluste durch das Phase-Shift Konzept deutlich reduziert werden können. Eine erste Halbbrücke umfasst die Halbleiterschalter Q1, Q3. Eine zweite Halbbrücke umfasst die Halbleiterschalter Q4, Q2. Jeder der Halbleiterschalter Q1 bis Q4 weist eine zugehörige Diode D1 bis D4 auf, wie in den Figuren 5 bis 8 dargestellt.

Die Figuren 5A, 5B zeigen eine positive Treibphase, bei der die Halbleiterschalter Q1, Q2 leiten, sodass ein elektrischer Strom durch die Primärspule des zugehörigen Transformators 8 fließt, wie in Fig. 5A schematisch dargestellt.

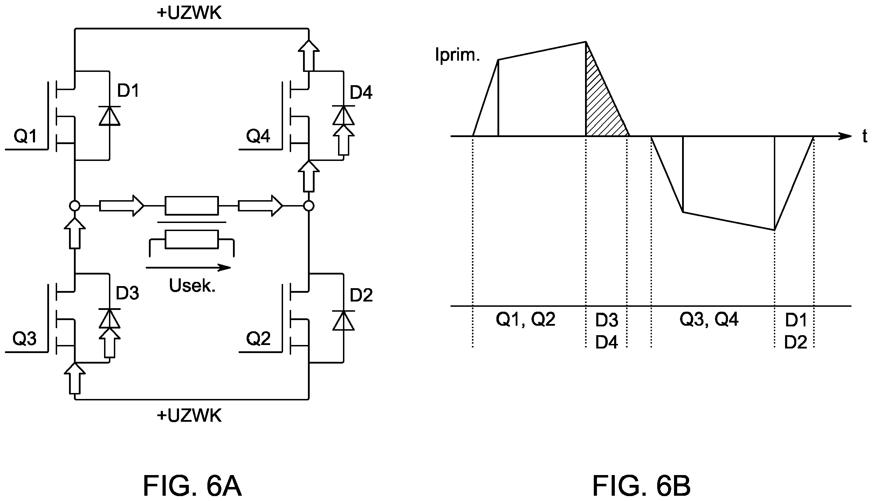

Die Figuren 6A, 6B zeigen eine sich zeitlich daran anschließende positive Freilaufphase, bei welcher die Dioden D3, D4, welche parallel zu den Halbleiterschaltern Q3, Q4 verschaltet sind, elektrisch leiten. Wie man in Fig. 6B erkennen kann, fällt der durch die Primärspule fließende Strom dabei zeitlich ab.

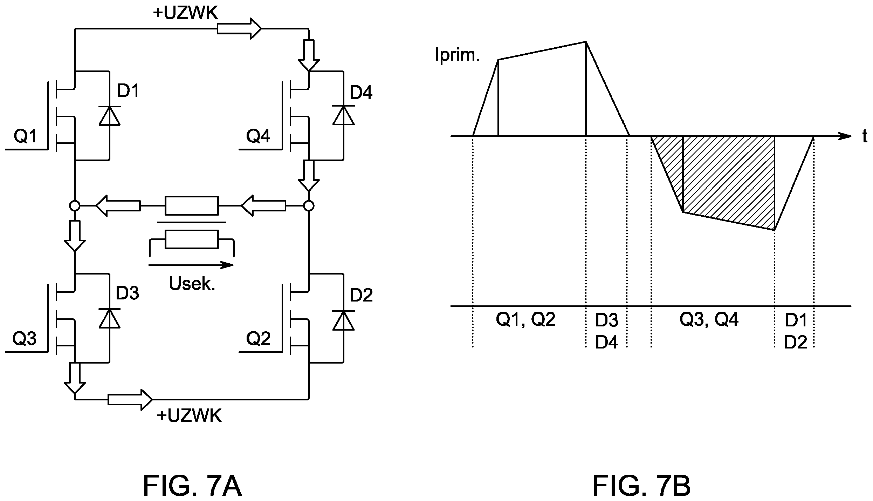

Die Figuren 7A, 7B zeigen eine weitere sich daran anschließende negative Treibphase, bei der die Halbleiterschalter Q3, Q4 elektrisch leitend sind und einen Strom in entgegengesetzter Richtung durch die Primärspule des daran angeschlossenen Transformators 8 treiben, wie aus dem Signaldiagramm aus Fig. 7B erkennbar.

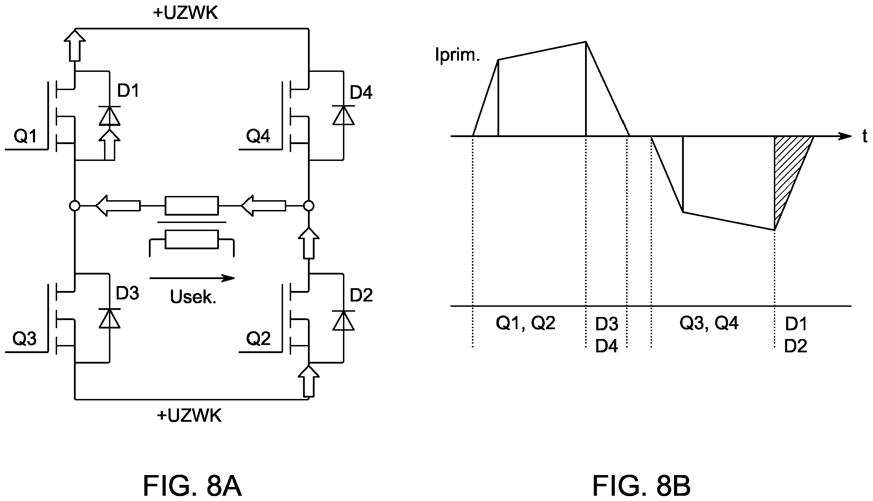

Die Figuren 8A, 8B zeigen eine weitere sich daran anschließende negative Freilaufphase, bei welcher die Dioden D1, D2, welche zu den Halbleiterschaltern Q1, Q2 parallel verschaltet sind, leiten, wobei der durch die Primärspule fließende elektrische Strom wieder auf null abfällt, wie in dem Zeitsignaldiagramm gemäß Fig. 8B erkennbar.

Die in den verschiedenen Figuren 5 bis 8 dargestellten Phasen werden durch die Steuerung 11 zyklisch wiederholend für die jeweilige Wechselrichterschaltung 7 ausgeführt. Jede Wechselrichterschaltung 7 weist bei der dargestellten Ausführungsform vier Transistoren, insbesondere IGBT-Halbleiterschalter Q1, Q2, Q3, Q4 auf, die von der Steuerung 11 Steuerungssignale zum Schalten der Halbleiterschalter empfangen. Die Steuerung 11 kann dabei die verschiedenen als Vollbrücke verschalteten Wechselrichterschaltungen 7A, 7B zeitlich aufeinander abgestimmt schalten und somit dabei beispielsweise auch verschiedene von den verschiedenen Schweißkreisen SK ausgeführte Schweißprozesse aufeinander zeitlich abstimmen bzw. miteinander synchronisieren. Insbesondere bei einer Schweißanlage, bei der mehrere Schweißprozesse gleichzeitig durch verschiedene Schweißkreise SK insbesondere an einem gemeinsamen Werkstück ausgeführt werden, kann hierdurch eine Effizienzsteigerung erzielt werden.

Die Schweißeinheiten 10 der verschiedenen Schweißkreise SK können auch Schweißzangen umfassen. Der transformierte Schweißstrom kann an Elektroden der Schweißzange abgegeben werden. Bei einer möglichen Ausführungsform kann ein Kraftsystem die beiden Elektroden der Schweißzange auf zwei miteinander zu verschweißende bzw. zu verbindende Werkstücke an einem Schweißpunkt pressen. Einer der Schweißkreise SK kann somit auch zum Widerstandspunktschweißen eingesetzt werden.

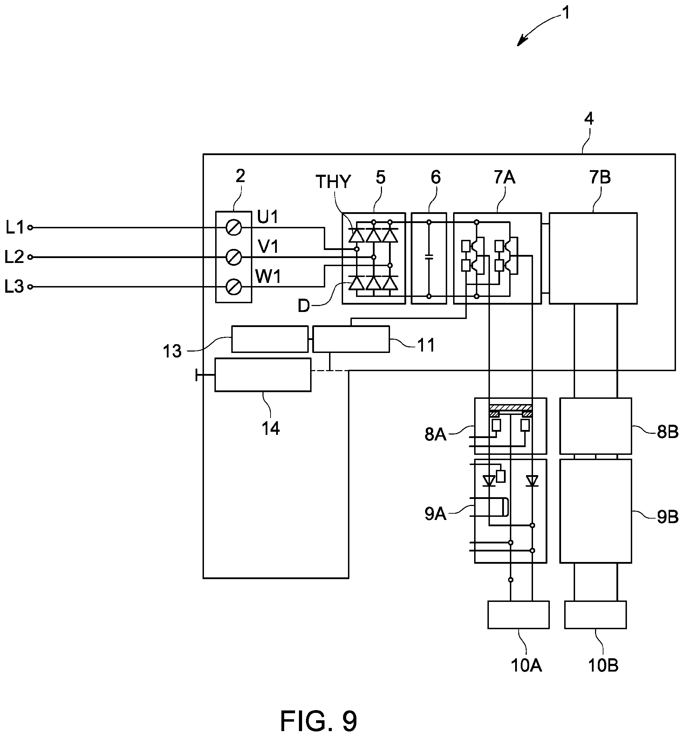

Fig. 9 zeigt ein Blockschaltbild einer weiteren möglichen Ausführungsform einer erfindungsgemäßen Multi-Inverterstromquelle 1. Bei dem in Fig. 9 dargestellten Ausführungsbeispiel verfügt die Multi-Inverterstromquelle 1 über einen Netzanschluss 2 zum Anschluss an ein Stromversorgungsnetz SVN. Dieses Stromversorgungsnetz SVN liefert bei einer möglichen Ausführungsform eine mehrphasige Wechselspannung L1, L2, L3 an entsprechende Anschlüsse des Netzanschlusses 2. Die Multi-Inverterstromquelle 1 umfasst ein Leistungsteil 4, welches die Netzrichtergleichschaltung 5, den Zwischenkreis 6 und die verschiedenen Wechselrichterschaltungen 7A, 7B umfasst. Die Netzrichtergleichschaltung 5 ist zur Gleichrichtung der internen mehrphasigen Netzwechselspannung U1, V1, W1 zu einer Zwischenkreisspannung U_{ZK} vorgesehen. Wie in Fig. 9 schematisch angedeutet, verfügt der Zwischenkreis 6 über mindestens einen Zwischenkreiskondensator 6A als Energiespeicher. Bei diesem Zwischenkreiskondensator 6A kann es sich um einen Elektrolytkondensator oder um einen Folienkondensator handeln. Bei einer möglichen Ausführungsform kann die an dem Zwischenkreiskondensator 6A des Zwischenkreises 6 anliegende Zwischenkreisspannung U_{ZK} durch eine Messschaltung überwacht werden, die sensorisch die Zwischenkreisspannung U_{ZK} erfasst und an die Steuerung 11 der Multi-Inverterstromquelle 1 meldet. Bei einer möglichen Implementierung kann die gespeicherte Energie des Zwischenkreiskondensators 6A bei Auftreten eines Ereignisses automatisch abgesenkt werden. Ein solches Ereignis ist beispielsweise die ungewollte Erhöhung der Zwischenkreisspannung U_{ZK} über einen Schwellenwert. Ein weiteres Ereignis kann beispielsweise das Ende eines im Schweißkreis SK der Schweißanlage vorgenommenen Schweißvorganges sein.

Das Leistungsteil 4 der Multi-Inverter-Stromquelle 1 umfasst mehrere Wechselrichterschaltungen 7A, 7B, wie in Fig. 9 erkennbar. Die Wechselrichterschaltungen 7A,7B können unterschiedliche Topologien und Leistungsklassen aufweisen. Die Wechselrichterschaltungen wandeln die Zwischenkreisspannung U_{ZK} des Zwischenkreises 6 in unterschiedliche Ausgangswechselspannungen für die verschiedenen mit der Multi-Inverterstromquelle 1 verbundenen anschließbaren Schweißtransformatoren 8A, 8B um. Es ist möglich hinsichtlich ihrer Topologie und/oder Leistungsklassen verschiedenartige Wechselrichterschaltungen 7A,7B zu mischen bzw. gemeinsam in einer Multi-Inverter-Stromquelle 1 zu verbauen. Die von dem Leistungsteil 4 der Multi-Inverterstromquelle 1 abgegebene einphasige Ausgangswechselspannung U_{AC} wird primärseitig in den zugehörigen Schweißtransformator 8A, 8B der jeweiligen Wechselrichterspannung 7A, 7B eingespeist. Der Schweißtransformator 8A, 8B ist jeweils sekundärseitig über einen zugehörigen Gleichrichter 9A, 9B mit einer Schweißeinheit 10A, 10B, beispielsweise einem Schweißbrenner, eine Schweißzubehöreinheit oder einer Schweißzange, verbunden.

Bei dem in Fig. 9 dargestellten Ausführungsbeispiel, verfügt die Multi-Inverterstromquelle 1 in der Steuerung 11 über ein Netzteil 13 zur Stromversorgung der Steuerung 11. Darüber hinaus kann die Multi-Inverterstromquelle 1 über einen in Fig. 9 schematisch dargestellten Kühlkörper 14 verfügen. Der Kühlkörper 14 kann beispielsweise durch eine Wasserkühlplatte gebildet sein. Bei einer alternativen Ausführungsform kann die Kühlung auch mithilfe von Luftkühlung erfolgen. Die in Fig. 9 dargestellte Multi-Inverterstromquelle 1 kann beispielsweise in einem Schaltschrank montiert werden.

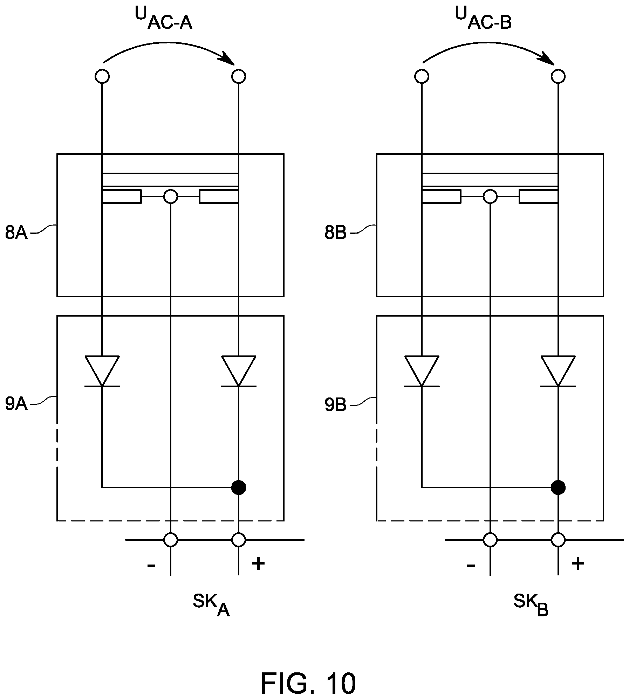

Fig. 10 zeigt ein Ausführungsbeispiel der an die Wechselrichterschaltungen 7A, 7B jeweils angeschlossenen Schweißtransformatoren 8A, 8B und der zugehörigen Gleichrichterschaltungen 9A, 9B. An den beiden Mittenabgriffen der beiden Halbbrücken der als Vollbrücke verschalteten Wechselrichterschaltung 7 ist eine Primärspule des zugehörigen Transformators 8 beispielsweise über eine Steckverbindung anschließbar.

Die Transformatoren 8A, 8B transformieren die Spannung herunter und liefern einen Schweißstrom, welcher durch die zugehörige nachgeschaltete Gleichrichterschaltung 9 gleichgerichtet wird und an den jeweiligen Schweißkreis SK abgegeben wird. Die von den Wechselrichterschaltungen 7A, 7B an die Primärspule des zugehörigen Schweißtransformators 8A, 8B jeweils abgegebene Ausgangswechselspannung U_{AC} kann bei einer möglichen Ausführungsform in Abhängigkeit eines sensorisch erfassten Messsignales geregelt werden. Beispielsweise kann der von der Gleichrichterschaltung 9 abgegebene Strom sensorisch erfasst werden und der Steuerung 11 der Multi-Inverter-Stromquelle 1 zugeführt werden, um die Ausgangswechselspannung U_{AC} der zugehörigen Wechselrichterschaltung 7 zu regeln. Andere Parameter können durch die Steuerung 11 ebenfalls zur Regelung herangezogen werden, beispielsweise eine gemessene Spannung. Zusätzlich ist es auch möglich, Unsymmetrien zwischen den unterschiedlichen Schweißkreisen SK auszugleichen. Diese Unsymmetrien können beispielsweise aufgrund von Fertigungstoleranzen der verbauten Bauteile hervorgerufen werden. Darüber hinaus lässt sich durch die Regelung auch die Länge des in einem Lichtbogen-Schweißprozess entstehenden Lichtbogens einstellen bzw. regeln. Die Regelung erfolgt vorzugsweise in Echtzeit durch die Steuerung 11 während des in dem jeweiligen Schweißkreis SK durchgeführten Lichtbogen-Schweißprozesses. Hierzu verfügt die Steuerung 11 bei einer möglichen Ausführungsform über einen schnellen DSP-Controller bzw. Prozessor. Die verschiedenen Wechselrichterschaltungen 7A, 7B bieten eine erhöhte Flexibilität für verschiedene Anwendungsfälle, insbesondere für verschiedene Schweißprozesse, die durch unterschiedliche getrennte Schweißkreise SK der Schweißanlage ausgeführt werden. Darüber hinaus bieten die verschiedenen Wechselrichterschaltungen 7A, 7B auch eine zusätzliche Redundanz, insbesondere für den Fall, dass eine der Wechselrichterschaltungen 7A, 7B ausfällt. Durch Zusammenschaltung der Leistungen, die durch unterschiedliche Wechselrichterschaltungen 7A, 7B generiert werden, kann zudem die an einen Schweißprozess abgegebene elektrische Leistung bei Bedarf stufenweise erhöht werden. Darüber hinaus kann die gemeinsame Steuerung 11 die verschiedenen Prozesse bzw. Schweißprozesse durch Ansteuerung der verschiedenen Wechselrichterschaltungen 7A, 7B zeitlich aufeinander abstimmen bzw. synchronisieren. Bei einer möglichen Ausführungsform ist die erfindungsgemäße Multi-Inverterstromquelle 1 modular aufgebaut. Bei einer möglichen Ausführungsform können insbesondere die an die Wechselrichterschaltungen 7A, 7B angeschlossenen Schweißtransformatoren 8A, 8B und Gleichrichterschaltungen 9A, 9B als Modul für verschiedene Anwendungsfälle ausgetauscht werden. Die erfindungsgemäße Multi-Inverterstromquelle 1 verfügt über eine gemeinsame Gleichrichterschaltung 5 und einen einzigen gemeinsamen Zwischenkreis 6. Dies erlaubt es, bei gleicher zur Verfügung gestellter elektrischer Leistung die Multi-Inverterstromquelle 1 gegenüber herkömmlichen Inverterstromquellen in einem kleineren Gehäuse unterzubringen. Darüber hinaus wird der technische Aufwand bzw. die Anzahl der benötigten elektrischen Komponenten reduziert. Mit der erfindungsgemäßen Multi-Inverterstromquelle 1 ist es nicht nur möglich, unterschiedliche Schweißkreise SK parallel zu betreiben, sondern auch verschiedene Leistungsklassen zur Verfügung zu stellen.

### BEZUGSZEICHENLISTE

- 1: Multi-Inverterstromquelle
- 2: Netzanschluss
- 4: Leistungsteil
- 5: Gleichrichterschaltung
- 6: Zwischenkreis
- 7: Wechselrichterschaltung
- 8: Transformator
- 9: Gleichrichterschaltung
- 10: Schweißeinheit
- 11: Steuerung
- 12: Schalteinheit
- 13: Netzteil
- 14: Kühlkörper
- 15: Nutzerschnittstelle

## Patentansprüche

1. Multi-Inverterstromquelle für eine Schweißanlage, wobei die Multi-Inverterstromquelle (1) zumindest eine unabhängige Wechselrichterschaltung (7A; 7B) aufweist, wobei die unabhängigen Wechselrichterschaltungen (7A; 7B) eine von einem gemeinsamen Zwischenkreis (6) der Multi-Inverterstromquelle (1) bereitgestellte Zwischenkreisspannung (U_{ZK}) in Ausgangswechselspannungen für zugehörige an die Multi-Inverterstromquelle (1) anschließbare Transformatoren (8A; 8B) von getrennten Schweißkreisen (SK) der Schweißanlage umwandeln.

2. Multi-Inverterstromquelle nach Anspruch 1,
wobei die mindestens eine unabhängige Wechselrichterschaltung (7A; 7B) jeweils steuerbare Halbleiterschalter (Q) aufweist, welche in einer Vollbrücke miteinander verschaltet sind, welche die Zwischenkreisspannung (U_{ZK}) des Zwischenkreises (6) in zumindest eine Ausgangswechselspannung für einen zugehörigen Transformator (8A; 8B) umwandelt.

3. Multi-Inverterstromquelle nach Anspruch 2,
wobei die steuerbaren Halbleiterschalter (Q) der Wechselrichterschaltung (7A; 7B) durch eine Steuerung (11) der Multi-Inverterstromquelle (1) angesteuert werden.

4. Multi-Inverterstromquelle nach Anspruch 3,
wobei die Steuerung (11) die Umwandlung der Zwischenkreisspannung (U_{ZK}) durch die verschiedenen unabhängigen Wechselrichterschaltungen (7A; 7B) in die verschiedenen Wechselspannungen zeitlich synchronisiert.

5. Multi-Inverterstromquelle nach einem der vorangehenden Ansprüche,
wobei die mit den Wechselrichterschaltungen (7A; 7B) verbundenen Transformatoren (8A; 8B) mit zugehörigen Gleichrichterschaltungen (9A; 9B) verbunden sind, an die zumindest ein getrennter Schweißkreis (SK) der Schweißanlage angeschlossen ist.

6. Multi-Inverterstromquelle nach einem der vorangehenden Ansprüche,
wobei verschiedene Wechselrichterschaltungen (7A; 7B) über zugehörige Transformatoren (8A; 8B) und Gleichrichterschaltungen (9A; 9B) mittels einer durch die Steuerung (11) der Multi-Inverterstromquelle (1) angesteuerten Schalteinrichtung (12) zur gemeinsamen Energieversorgung an einen Schweißkreis (SK) der Schweißanlage schaltbar sind.

7. Multi-Inverterstromquelle nach einem der vorangehenden Ansprüche,
wobei die Schweißkreise (SK) jeweils mindestens eine Schweißeinheit (10) oder eine Schweißzubehöreinheit aufweisen.

8. Multi-Inverterstromquelle nach Anspruch 7,
wobei die Schweißeinheit (10) einen Schweißbrenner und/ oder eine Schweißzange aufweist.

9. Multi-Inverterstromquelle nach einem der vorangehenden Ansprüche,
wobei die Steuerung (11) der Multi-Inverterstromquelle (1) die von den Wechselrichterschaltungen (7A; 7B) jeweils abgegebene Ausgangswechselspannung in Abhängigkeit von mindestens einem Parameter des Schweißprozesses regelt wird.

10. Multi-Inverterstromquelle nach Anspruch 9,
wobei die zur Regelung herangezogenen Parameter des Schweißprozesses eine Schweißstromstärke und/oder eine Drahtfördergeschwindigkeit aufweisen.

11. Multi-Inverterstromquelle nach einem der vorangehenden Ansprüche 2 bis 10,
wobei die steuerbaren Halbleiterschalter (Q) der Wechselrichterschaltung (7A; 7B) IGBT-Schalter sind, wobei vier IGBT-Schalter in einer aus zwei Halbbrücken bestehenden Vollbrücke miteinander verschaltet sind.

12. Multi-Inverterstromquelle nach einem der vorangehenden Ansprüche 2 bis 11,
wobei die steuerbaren Halbleiterschalter (Q) der Wechselrichterschaltung (7A; 7B) eine NPC Topologie aufweisen.

13. Multi-Inverterstromquelle nach Anspruch 11,
wobei an Mittenabgriffen der beiden Halbbrücken der als Vollbrücke verschalteten Wechselrichterschaltung (7A; 7B) eine Primärspule des zugehörigen Transformators (8A; 8B) über eine Steckverbindung anschließbar ist.

14. Multi-Inverterstromquelle nach einem der vorangehenden Ansprüche,
wobei die Multi-Inverterstromquelle modular aufgebaut ist.

15. Schweißanlage mit mehreren getrennten Schweißkreisen, die jeweils über einen Transformator (8A; 8B) mit Strom versorgt werden, wobei jeder Transformator (8A; 8B) an eine oder mehrere Wechselrichterschaltungen (7A; 7B) einer Multi-Inverterstromquelle (1) nach einem der vorangehenden Ansprüche 1 bis 13 durch eine Steuerung (11) der Multi-Inverterstromquelle (1) oder durch eine Steuerung der Schweißanlage schaltbar ist.
